# NEUE EUROPÄISCHE PATENTSCHRIFT

(11) **EP 1 522 879 B2**
(45) Veröffentlichungstag und Bekanntmachung des Hinweises auf die Entscheidung über den Einspruch: **18.01.2017**
(45) Hinweis auf die Patenterteilung: 15.05.2013
(21) Anmeldenummer: 04023748.9
(22) Anmeldetag: 06.10.2004
(51) Int. Cl.: G01V 8/14

(54) **Optoelektronischer Sensor und Verfahren zur Detektion eines Objekts in einem Überwachungsbereich**
Opto-electronic sensor and method of detecting an object in a surveillance area
Capteur opto-électronique et procédé de detection d'un objet dans une zone de survéillance

(30) Priorität: 06.10.2003 DE 10346813
(43) Veröffentlichungstag der Anmeldung: 13.04.2005
(73) Patentinhaber: ifm electronic gmbh, 45128 Essen (DE)
(72) Erfinder: Lautenschläger, Holger, 88097 Eriskirch (DE); Jaromir, Palata, 88085 Langenargen (DE); Buck, Martin, 88142 Wasserburg (DE); Bielefeldt, Hartmut, Dr., 88699 Frickingen (DE); Fensterle, Rolf, 88048 Friedrichshafen (DE)
(74) Vertreter: Gesthuysen Patent- und Rechtsanwälte

(56) Entgegenhaltungen:
- EP-A- 0 324 606
- DE-A1- 2 805 423
- DE-A1- 10 018 948
- DE-A1- 10 021 590
- DE-A1- 10 022 054
- DE-A1- 19 810 231
- DE-A1- 19 839 305
- DE-A1- 19 933 439
- US-A- 5 648 979
- US-A- 5 978 401
- TUCKER J R ET AL: "Laser range finding using the self-mixing effect in a vertical-cavity surface-emitting laser" OPTOELECTRONIC AND MICROELECTRONIC MATERIALS AND DEVICES, 2002 CONFERENCE ON 11-13 DEC. 2002, PISCATAWAY, NJ, USA,IEEE, 11. Dezember 2002 (2002-12-11), Seiten 583-586, XP010662222 ISBN: 0-7803-7571-8
- APPLIED PHYSICS LETTERS: 'Technique for integration of vertical cavity lasers and resonant photodetectors', Bd. 73, 1, 06 Juli 1998, O. SJOLUND ET AL Seiten 1 - 3

## Beschreibung

Die Erfindung betrifft einen optoelektronischen Sensor, insbesondere eine Reflexlichtschranke oder einen Reflexlichttaster, zum Detektieren eines Objekts in einem Überwachungsbereich, mit einem Gehäuse, mit einer Sende- und Empfangsoptik, mit mindestens einem optoelektronischen Bauelement und mit einer Auswerteschaltung. Daneben betrifft die Erfindung noch ein Verfahren zur Detektion eines Objekts in einem Überwachungsbereich, mit einem optoelektronischen Sensor, wobei ein elektrisches Sendesignal in ein optische Sendesignal umgewandelt wird, das optische Sendesignal in den Überwachungsbereich ausgesendet, von einem Reflektor oder einem Objekt als optisches Empfangssignal zumindest teilweise zum optoelektronischen Sensor zurück reflektiert und in ein elektrische Empfangssignal umgewandelt wird

Bekannte optoelektronische Sensoren weisen stets einen Lichtsender und mindestens einen Lichtempfänger, d. h. mindestens zwei verschieden optoelektronische Bauelemente auf. Dabei werden als Sendebauelemente, also als lichtemittierende Bauelemente, typischerweise Dioden, vorzugsweise Laserdioden, und als Empfangsbauelemente im allgemeinen Fotodioden verwendet. Optoelektronischen Sensoren können im wesentlichen in drei unterschiedliche Arten unterteilt werden, nämlich in Einwegsysteme, Reflexionssysteme und Tastersysteme.

Einwegsysteme bestehen einerseits aus einer Sendervorrichtung und andererseits aus einer räumlich von dieser getrennten Empfängervorrichtung. Die Sendervorrichtung und die Empfängervorrichtung werden einander gegenüberliegend an den seitlichen Begrenzungen eines zu überwachenden Bereichs derart angeordnet, so daß von der Sendervorrichtung emittiertes Licht von der Empfängervorrichtung empfangen werden kann. Nachteilig hierbei ist, daß zwei elektronische Geräte benötigt, montiert und mit elektrischer Energie versorgt werden müssen. Im Gegensatz dazu sind bei Reflexionssystemen, die auch als Reflexlichtschranken bezeichnet werden, Sender und Empfänger in einer einzigen Baueinheit, also in einem einzigen Gerät integriert.

Eine solche eine Sender-/Empfängervorrichtung darstellende Baueinheit wird an einer äußeren Begrenzung des zu überwachenden Bereichs angeordnet, während an der anderen, dieser gegenüberliegenden Begrenzung des zu überwachenden Bereichs ein Reflektor, z. B. ein Tripelspiegel, vorgesehen wird, der von der Sender-/Empfängervorrichtung emittiertes Licht derart auf diese zurück reflektiert, daß es von dem in der Sender-/Empfängervorrichtung integrierten Empfänger empfangen werden kann. Gegenüber dem Einwegsystem bietet die Reflexlichtschranke den Vorteil, daß nur ein elektrischer Anschluß erforderlich ist und der Reflektor aufgrund seiner speziellen Eigenschaft nur relativ grob zur Reflexlichtschranke ausgerichtet werden muß.

Reflexlichtschranken lassen sich aufgrund ihres optischen Aufbaus in zwei Gruppen einteilen. Bei den sogenannten echten Autokollimationssystemen wird die Trennung von Sende- und Empfangsstrahl mit einem halbdurchlässigem Spiegel oder einem Polarisationsfilter durchgeführt. Bei der zweiten Gruppe der Reflexlichtschranken erfolgt eine geometrische Teilung von Sende- und Empfangsstrahl durch eine Sendeoptik und eine versetzt dazu angeordnete separate Empfangsoptik. Lichtsender und Lichtempfänger sind in einem Gehäuse nahezu parallel, jedoch mit geringem Abstand voneinander angeordnet. Eine derartige Reflexlichtschranke mit einer Sendeoptik und einer zweiten Empfangsoptik ist beispielsweise aus der DE 42 38 116 C2 bekannt.

Den beiden zuvor beschriebenen Systemen - Einwegsystem und Reflexionssystem - ist gemeinsam, daß der Empfänger kein Lichtsignal oder nur ein verringertes Lichtsignal empfängt, wenn sich ein Objekt in dem zu überwachenden Bereich befindet, da dieses Objekt den Strahlengang des von dem Sender emittierten Lichtes vollständig oder zumindest teilweise unterbricht. Der Lichtempfänger detektiert somit im Normalfall - keine Unterbrechung der Überwachungsstrecke - den vom Lichtempfänger ausgesandten Lichtstrahl bzw. die ausgesandten Lichtimpulse.

Grundsätzlich verschieden von dieser Funktionsweise ist die Funktionsweise von optoelektronischen Tastersystemen, auch Reflexlichttaster genannt. Bei diesen Systemen befinden sich der Sender und der Empfänger ebenfalls zusammen in einer Baueinheit, im Unterschied zu eine Reflexlichtschranke ist jedoch kein Reflektor als Bestandteil des Systems vorgesehen. Stattdessen wird das vom Sender in der Sender-/Empfängervorrichtung emittierte Licht an einem zu erkennenden Objekt reflektiert. Fällt wenigstens ein Teil des an dem zu erkennenden Objekt reflektierten Lichtes auf die Sender-/Empfängervorrichtung zurück, so kann dieser reflektierte Lichtanteil von dem Empfänger detektiert werden. Reflexlichttaster sind beispielsweise aus der DE 35 13 671 C3, der DE 43 11 691 A1 oder der DE 199 33 439 C2 bekannt.

Aufgrund der in der Regel schlechter reflektierenden Oberfläche des Objekts im Vergleich zu einem Reflektor, weisen Reflexlichttaster eine geringe Reichweite als Reflexionslichtschranken auf. Reflexlichttaster haben jedoch den Vorteil, daß sie kein zweites aktives Element wie Einweglichtschranken und keinen Reflektor wie Reflexlichtschranken benötigen. Reflexlichttaster zur berührungslosen optoelektronischen Erfassung von Gegenständen arbeiten entweder als energetische V-Lichttaster oder als Lichttaster nach dem Triangulationsprinzip.

Beim energetischen V-Lichttaster wird das ausgesendete Licht an dem zu erfassenden Objekt diffus reflektiert. Ein Teil des reflektierten Lichtes trifft auf den Lichtempfänger und löst den Schaltvorgang aus. Ausgewertet werden die beiden Zustände - Reflexion oder keine Reflexion -, die gleichbedeutend sind mit der An- bzw. Abwesenheit eines Gegenstandes im Tastbereich. Systembedingt ist die Tastweite des einfachen energetischen V-Lichttasters daher sehr stark vom Reflexionsgrad des zu überwachenden Objektes abhängig. Lichtsender und Lichtempfänger können dabei eine gemeinsame Sende-/Empfangsoptik aufweisen, wobei hinter der Sende-/Empfangsoptik ein Strahlteiler angeordnet ist, der das vom Objekt reflektierte Licht zum Empfänger umlenkt.

Die Triangulationslichttaster arbeiten nach dem Doppellinsenprinzip, d. h. die Sendeoptik und die Empfangsoptik sind räumlich getrennt und der Sendestrahl und der Empfangsstrahl bilden einen Winkel zueinander. Der Schnittpunkt von Sendestrahl und Empfangsstrahl bestimmt den maximalen Tastabstand dieser Systeme. Wegen des relativ geringen technischen Aufwandes haben Triangulationslichttaster unter Verwendung von zwei Fotodioden - eine für den Nahbereich und eine für den Fernbereich - allgemeine Verbreitung gefunden. Der Schaltabstand wir dabei von der Lateralposition der Trennlinie zwischen den beiden Fotodioden bestimmt.

Die vorliegende Erfindung betrifft nun einen optoelektronischen Sensor gemäß der zweiten oder dritten Art, d. h. eine Reflexlichtschranke oder einen Reflexlichttaster. Dabei soll im Rahmen der Erfindung unter einer Detektion eines Objekts in einem Überwachungsbereich sowohl die reine Feststellung - Objekt vorhanden oder nicht - als auch eine Bestimmung der Position des Objekts, d. h. der Entfernung des Objekts von dem optoelektronischen Sensor verstanden werden. Eine Sende- und Empfangsoptik kann entweder aus zwei separaten Optiken, d.h. einer Sendeoptik und einer separaten Empfangsoptik oder aus einer einzigen Optik, die dann sowohl Sendeoptik als auch Empfangsoptik ist, bestehen.

Aus der DE 198 39 305 A1 ist beispielsweise eine Reflexlichtschranke mit einem Kunststoffgehäuse bekannt, wobei das Kunststoffgehäuse eine zentrale Einbauvertiefung aufweist, die bodenseitig durch einen Gehäuseboden begrenzt wird. Auf der Oberfläche des Gehäusebodens sind vier elektrische Metallkontaktflächen angeordnet, wobei auf einer Kontaktfläche ein Lichtsender und auf einer anderen, beabstandeten Kontaktfläche ein Lichtempfänger angeordnet ist. Die bekannte Reflexlichtschranke soll dadurch sehr geringe Abmessungen aufweisen können, dass zwischen dem Lichtsender und dem Lichtempfänger keine die beiden Bauelemente voneinander optisch abschirmende Trennwand vorgesehen ist. Um die Gefahr eines zu hohen Übersprechens vom Lichtsender auf den Lichtempfänger zu beseitigen, wird ein Lichtsender mit geringer Strahldivergenz verwendet.

Die DE 28 05 423 A1 offenbart eine Lichtschranke mit einer Lichtquelle und einem Lichtempfänger, die in den beiden Schenkeln eines U-förmigen Gehäuses angeordnet sind. Dadurch verlaufen der Sendelichtstrahl und der Empfangslichtstrahl auf getrennten Wegen vor und hinter einem zu überwachenden Objekt, wobei in einem gegenüber liegenden Reflektorbauteil zwei Spiegel so angeordnet sind, dass der vom Sender kommende Lichtstrahl umgelenkt und zum Empfänger zurückgesandt wird.

Die beiden Arten der optoelektronischen Sensoren, bei denen die Sendervorrichtung und die Empfängervorrichtung in einem Gehäuse angeordnet sind, weisen, bedingt durch die räumliche Trennung von Sende- und Empfangsstrahl, jeweils verschiedene Nachteile auf. Sowohl die Verwendung eines halbdurchlässigen Spiegels oder Strahlteilers als auch die benachbarte Anordnung einer Sendeoptik und einer Empfangsoptik führen jeweils dazu, daß der von einem Gegenstand oder einem Reflektor reflektierte Anteil des Lichtes, der auf den Empfänger trifft, verringert wird. Grund dafür ist zum einen der relativ hohe Dämpfungswert der herkömmlichen Strahlteiler, wobei nicht nur das Empfangssignal, sondern auch das Sendesignal den Strahlteiler passieren muß, zum anderen die einbaubedingte geringe Größe der Linsen bei einer Sendeoptik und der separaten Empfangsoptik, wodurch ein relativ geringer Anteil des reflektierten Lichtes auf die Empfangsoptik trifft und somit zum Empfänger geführt wird. Außerdem stellen die zur Trennung von Sende- und Empfangsstrahl erforderlichen Strahlteiler einen erheblichen Kostenfaktor bei der Herstellung der optoelektronischen Sensoren dar.

Der vorliegende Erfindung liegt daher die Aufgabe zugrunde, einen eingangs beschriebenen optoelektronischen Sensor sowie ein eingangs beschriebenes Verfahren zur Detektion eines Objekts in einem Überwachungsbereich anzugeben, mit dem auf möglichst einfache Art und Weise ein Objekt möglichst zuverlässig detektiert werden kann.

Diese Aufgabe ist bei dem eingangs beschriebenen optoelektronischen Sensor mit den Merkmalen des Patentanspruchs 1 dadurch gelöst, daß ein und dasselbe optoelektronische Bauelement zeitlich nacheinander als Lichtsender und als Lichtempfänger fungiert, so daß nur ein optoelektronisches Bauelement vorgesehen ist, das sowohl als Sendebauelement als auch als Empfangsbauelement fungiert, so dass keine räumliche Trennung zwischen Lichtsender und Lichtempfänger besteht und somit der optische Signalweg innerhalb des optoelektronischen Sensors für das optische Sendesignal und das optische Empfangssignal identisch ist. Das optoelektronische Bauelement kann somit auch als optoelektronisches Sende- und Empfangsbauelement bezeichnet werden. Erfindungsgemäß ist somit die räumliche Trennung von Lichtsender und Lichtempfänger durch eine zeitliche Trennung ersetzt worden. Hierdurch reduzieren sich zunächst die benötigten Bauteile, da anstelle zweier Bauteile, eines Lichtsenders und eines Lichtempfängers, nur ein optoelektronisches Bauteil benötigt wird. Zusätzlich kann auch auf einen Strahlteiler verzichtet werden, wodurch die zuvor beschriebenen Nachteile bei der Verwendung eines Strahlteilers vermieden werden.

Ein weiterer Vorteil, der sich dadurch ergibt, daß nicht mehr ein separater Lichtsender und ein separater Lichtempfänger sondern nur noch ein einziges optoelektronisches Bauteil verwendet wird, besteht darin, daß der Justageaufwand, der ansonsten bei der Ausrichtung von Sender und Empfänger erforderlich ist, entfällt. Durch die Verwendung nur noch eines einzigen optoelektronischen Bauelements weist der optoelektronische Sensor vorzugsweise auch nur noch eine einzige Sende- und Empfangsoptik auf, durch die das optische Sendesignal kollimiert bzw. das optische Empfangssignal auf das optoelektronische Bauelement gelenkt wird.

Bei dem verwendeten optoelektronischen Bauelement kann es sich grundsätzlich um eine herkömmliche Diode handeln. Vorzugsweise wird als optoelektronisches Bauelement jedoch eine Laserdiode, insbesondere eine VCSEL-Diode (Vertical Cavitiy Surface Emitting Laserdiode) verwendet. Der Vorteil einer derartigen VCSEL-Diode besteht zunächst darin, daß sie auch als schnelle Fotodiode verwendet werden kann. Der optische Resonator der VCSEL-Diode sorgt dabei nicht nur für einen gewünschten schmalbandigen Sendeimpuls, sondern fungiert gleichzeitig auch als sehr schmalbandiger Empfangsfilter, dessen Mittenfrequenz automatisch mit der Sendefrequenz gekoppelt ist. Daraus ergibt sich als besonderer Vorteil des erfindungsgemäßen optoelektronischen Sensors, daß er äußerst störfest gegenüber Fremdlicht ist. Die Verwendung eines vergleichbar schmalbandigen Filters vor einem Lichtempfänger ist bei einem herkömmlichen optoelektronischen Sensor aufgrund des Temperaturdriffs der Emissionswellenlänge des Sendebauelements kaum realisierbar.

Soll die Diode als Lichtsender fungieren, so wird sie in Durchlaßrichtung betrieben, während sie dann, wenn sie als Lichtempfänger fungieren soll, in Sperrichtung betrieben wird. Bei Beschaltung der Diode mit Vorspannung in Sperrichtung kann diese auch als schnelle Fotodiode eingesetzt werden. Dadurch ergibt sich die Möglichkeit, mit dem erfindungsgemäßen optoelektronischen Sensor nicht nur die Anwesenheit eines Objekts in einem Überwachungsbereich sondern auch dessen Abstand vom optoelektronischen Sensor festzustellen. Der optoelektronische Sensor kann dann auch als Entfernungsmeßgerät eingesetzt werden.

Entfernungsmeßgeräte basieren dabei auf dem Prinzip, daß bei bekannter Laufzeit eines Signals durch ein Medium und gleichzeitig bekannter Ausbreitungsgeschwindigkeit des Signals in diesem Medium sich die Entfernung als Produkt von Ausbreitungsgeschwindigkeit und Laufzeit ergibt. Aufgrund der extrem hohen Ausbreitungsgeschwindigkeit von Lichtwellen ist dabei auch eine hohe Auswertegeschwindigkeit der verwendeten optoelektronischen Sensoren erforderlich, was durch die Verwendung einer VCSEL-Diode im Sperrbetrieb als Lichtempfänger gegeben ist.

Gemäß einer weiteren vorteilhaften Ausgestaltung der Erfindung, der besondere Bedeutung zukommt, wird der bei der Entfernungsmessung auftretende sehr kurze Licht-Laufzeitimpuls durch stroboskopische Abtastung zeitlich gedehnt. Bei einem Abstand eines Objekts vom optoelektronischen Sensor von einem Meter, woraus sich eine für den Lichtstrahl zurückzulegende Strecke von zwei Metern ergibt, beträgt die Laufzeit des Lichtes lediglich 6,67 ns. Durch die stroboskopische Abtastung wird dieser Impuls soweit gedehnt, daß er von einer Auswerteschaltung mit einem Mikroprozessor problemlos verarbeitet werden kann. Gemäß einer bevorzugten Ausgestaltung weist hierzu der optoelektronische Sensor einen Abtaster mit einem Speicherkondensator und einem schnellen Schalter auf. Der Schalter wird dabei von einem im Vergleich zum Sendepuls gedehnten Abtastimpuls gesteuert.

Zur Erzeugung des Abtastimpulses sind bei einer ersten Ausgestaltung des optoelektronischen Sensors ein Hochfrequenzgenerator, ein Niederfrequenzgenerator und ein Mischer vorgesehen, wobei der Sendeimpuls von dem Hochfrequenzgenerator und der Abtastimpuls von dem am Mischer erzeugten Mischprodukt aus der Frequenz des Hochfrequenzgenerators und der Frequenz des Niederfrequenzgenerators abgeleitet wird. Der Niederfrequenzgenerator stellt somit das niederfrequente "Wobbelsignal" zur Verfügung, daß mit dem Signal des Hochfrequenzgenerators gemischt wird.

Gemäß einer alternativen Ausgestaltung des optoelektronischen Sensors sind zur Erzeugung des Abtastimpulses neben dem ersten Hochfrequenzgenerator ein zweiter Hochfrequenzgenerator und ein Mischer vorgesehen. Die beiden Hochfrequenzgeneratoren erzeugen dabei zwei Signale, deren Frequenzen sich nur geringfügig voneinander unterscheiden. Als Mischprodukt wird dabei eine Schwebung erzeugt, aus der wiederum der Abtastimpuls abgeleitet wird.

Das eingangs beschriebene Verfahren zur Detektion eines Objekts in einem Überwachungsbereich, mit einem optoelektronischen Sensor, zeichnet sich gemäß Patentanspruch 9 dadurch aus, daß die Umwandlung des elektrischen Sendesignals in das optische Sendesignal und die Umwandlung des optischen Empfangssignals in das elektrische Empfangssignal zeitlich nacheinander durch ein und dasselbe optoelektronische Bauelement erfolgt. Auch das erfindungsgemäße Verfahren zeichnet sich somit zunächst dadurch aus, daß anstelle der räumlichen Trennung von Sender und Empfänger bzw. von Sendesignal und Empfangssignal eine zeitliche Trennung vorgenommen wird.

Dabei ist der optische Signalweg innerhalb des optoelektronischen Sensors für das optische Sendesignal und das optische Empfangssignal identisch. Das optische Sendesignal und das optische Empfangssignal durchlaufen somit denselben optischen Signalweg, jeweils in unterschiedlicher Richtung. Dadurch, daß das optische Sendesignal und das optische Empfangssignal denselben Signalweg durchlaufen, entfällt die ansonsten in Stand der Technik erforderliche Justierung der Sendeoptik und der räumlich daneben angeordneten Empfangsoptik bzw. die Einstellung eines Strahlteilers.

Auch das erfindungsgemäße Verfahren wird vorteilhafterweise zur Distanzbestimmung eines Objekts in dem Überwachungsbereich benutzt, so daß ein pulsförmiges Sendesignal verwendet wird und die Laufzeit des optischen Signals gemessen und daraus die Entfernung des Objekts bestimmt wird. Wie zuvor im Zusammenhang mit dem erfindungsgemäßen optoelektronischen Sensor bereits beschrieben wird auch bei dem erfindungsgemäßen Verfahren vorteilhafterweise das elektrische Empfangssignal stroboskopisch abgetastet und dadurch zeitlich gedehnt. Dabei wird das elektrische Empfangssignal für einen kurzen Zeitraum abgetastet, wobei der Abtastzeitpunkt kontinuierlich zwischen aufeinanderfolgenden Perioden des Sendeimpulses verschoben wird. Die Ablaufsteuerung für Erzeugung des Abtastimpulses kann dabei im wesentlichen analog oder im wesentlichen digital arbeiten.

Im einzelnen gibt es nun eine Vielzahl von Möglichkeiten, den erfindungsgemäßen optoelektronischen Sensor bzw. das erfindungsgemäße Verfahren zur Detektion eines Objekts auszugestalten und weiterzubilden. Dazu wird verwiesen einerseits auf die den Patentansprüchen 1 und 9 nachgeordneten Patentansprüche, andererseits auf die nachfolgende Beschreibung bevorzugter Ausführungsbeispiele in Verbindung mit der Zeichnung. In der Zeichnung zeigen
- Fig. 1: eine vereinfachte Darstellung eines optoelektronischen Sensors gemäß dem Stand der Technik,
- Fig. 2: eine vereinfachte Darstellung eines ersten Ausführungsbeispiels eines erfindungsgemäßen optoelektronischen Sensors,
- Fig. 3: eine vereinfachte Darstellung eines zweiten Ausführungsbeispiels eines erfindungsgemäßen optoelektronischen Sensors und
- Fig. 4: ein stark vereinfachtes Schaltbild eines erfindungsgemäßen optoelektronischen Sensors.

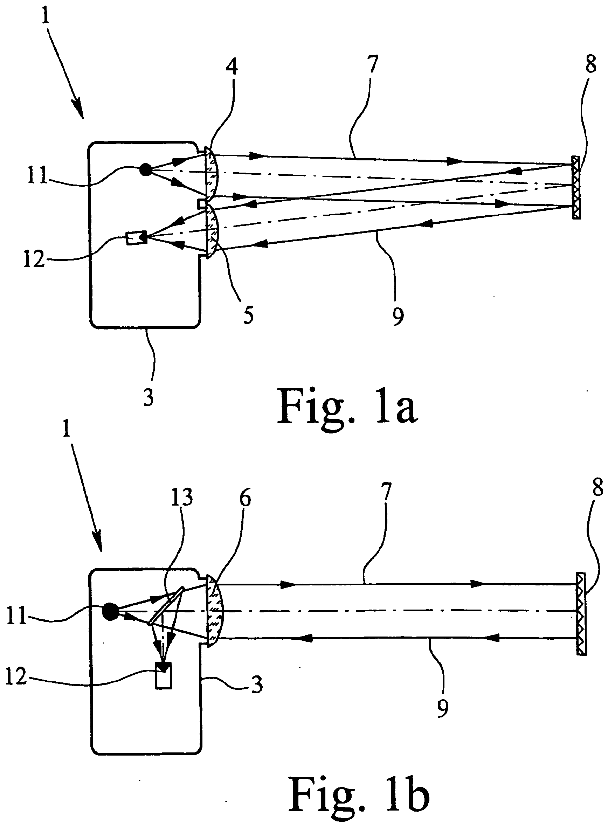

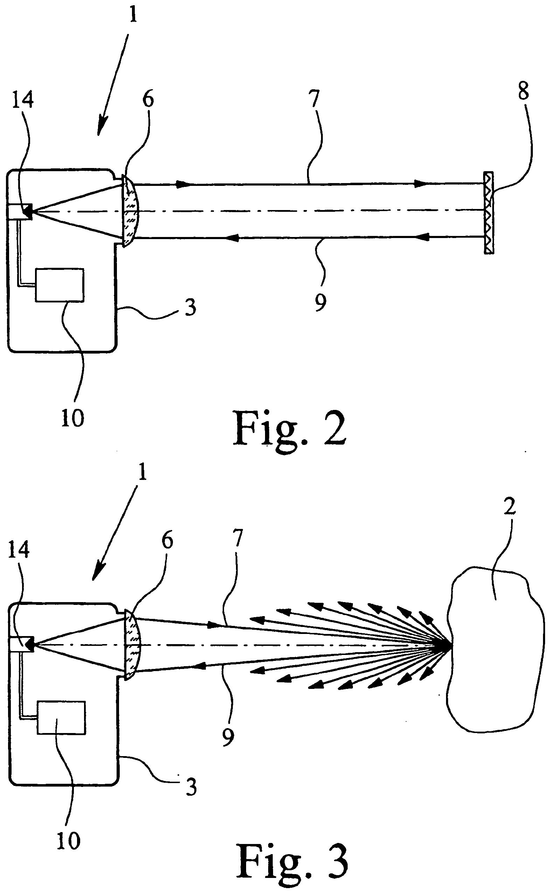

Die Figur 1 zeigt zwei Ausführungsbeispiele eines bekannten optoelektronischen Sensors 1, nämlich einer Reflexlichtschranke, zum Detektieren eines - nur in Figur 3 dargestellten - Objekts 2 in einem Überwachungsbereich. Der in Fig. 1a dargestellte optoelektronische Sensor 1 weist ein Gehäuse 3 mit einer Sendeoptik 4 und einer separaten Empfangsoptik 5. Im Unterschied dazu weist der optoelektronische Sensor 1 gemäß Fig. 1b nur eine Sende- und Empfangsoptik 6 auf, durch die sowohl der Sendestrahl 7 aus dem Gehäuse 3 austritt als auch der an einem Reflektor 8 reflektierte Empfangsstrahl 9 wieder in das Gehäuse 3 eintritt. Darüber hinaus weisen sowohl die in Fig. 1 dargestellten bekannten optoelektronischen Sensoren 1 als auch die in den Fig. 2 und 3 dargestellten erfindungsgemäßen optoelektronischen Sensoren 1 noch eine - nur schematisch in den Fig. 2 und 3 dargestellte - Auswerteschaltung 10 auf. Den in Fig. 1 dargestellten optoelektronischen Sensoren 1 ist gemeinsam, daß sie jeweils einen Lichtsender 11 zur Erzeugung des Sendestrahls 7 und einen separaten Lichtempfänger 12 zum Empfang des reflektierten Empfangsstrahls 9 aufweisen.

Die beiden in den Figuren 1a und 1b dargestellten Reflexlichtschranken unterscheiden sich nun dadurch, daß bei der in Fig. 1a gezeigten Reflexlichtschranke durch die getrennte Anordnung von Sendeoptik 4 und Empfangsoptik 5 eine geometrische Teilung von Sendestrahl 7 und Empfangsstrahl 9 erfolgt. Dabei wird der von dem Lichtsender 11 erzeugte Sendestrahl 7 durch die Sendeoptik 4 auf den Reflektor 8 gelenkt. Aufgrund des geometrischen Versatzes innerhalb des Reflektors 8 bzw. der kleinen Winkelfehler bei der Rückspiegelung, wird die auftreffende Strahlung in einem mehr oder weniger großen Raumwinkel zurück reflektiert. Deshalb gelangt der unter einem Winkel zum Sendestrahl 7 verlaufende Empfangsstrahl 9 auf die neben der Sendeoptik 4 angeordnete Empfangsoptik 5, von der der Empfangsstrahl 9 auf den Lichtempfänger 12 fokussiert wird.

Die in Fig. 1b gezeigte bekannte Reflexlichtschranke unterscheidet sich zunächst dadurch von der Reflexlichtschranke gemäß Fig. 1 a, daß sie lediglich eine Sende- und Empfangsoptik 6 aufweist. Bei dieser, nach dem Autokollimationsprinzip arbeitenden Reflexlichtschranke erfolgt die Trennung von Sendestrahl 7 und Empfangsstrahl 9 durch einen halbdurchlässigen Spiegel 13, der auch als Strahlteiler bezeichnet wird. Der von dem Lichtsender 11 erzeugte Sendestrahl 7 trifft auf den halbdurchlässigen Spiegel 13, der den Sendestrahl 7 teilweise durchläßt. Dieser Anteil wird durch die Sende- und Empfangsoptik 6 zum Reflektor 8 gelenkt, von dem die Strahlung als Empfangsstrahl 9 zurück zur Sende- und Empfangsoptik 6 reflektiert wird. Der Empfangsstrahl 9 tritt durch die Sende- und Empfangsoptik 6 und trifft dann auf den Spiegel 13, an dem ein Teil des Empfangsstrahls 9 zum Lichtempfänger 12 reflektiert wird. Der Vorteil des in Fig. 1b dargestellten optoelektronischen Sensors 1, bei dem durch die Verwendung nur einer einzigen Sende- und Empfangsoptik 6 auf die Justierung von Sendeoptik 4 und Empfangsoptik 5 verzichtet und eine Optik mit einem größeren Durchmesser verwendet werden kann, wird jedoch durch die durch den halbdurchlässigen Spiegel 13 bedingten Lichtverluste erkauft.

Die in den Fig. 2 und 3 dargestellten erfindungsgemäßen optoelektronischen Sensoren 1 unterscheiden sich nun zunächst dadurch von den bekannten optoelektronischen Sensoren 1, daß anstelle eines separaten Lichtsenders 11 und eines separaten Lichtempfängers 12 nur ein einziges optoelektronisches Bauelement 14 verwendet wird. Die im Stand der Technik übliche räumliche Trennung von Lichtsender 11 und Lichtempfänger 12 wird dabei durch eine zeitliche Trennung ersetzt, d. h. das optoelektronische Bauelement 14 fungiert zeitlich nacheinander als Lichtsender und als Lichtempfänger.

Als Bauelement 14 eignet sich dabei insbesondere eine VCSEL-Diode 15, die aufgrund ihres optischen Resonators nicht nur einen sehr schmalbandigen Sendestrahl 7 aussendet, sondern aufgrund des beim Empfang als schmalbandiges optisches Filter wirkenden Resonators auch nur einem sehr schmalbandigen Empfangsstrahl 9 detektiert. Dies hat den Vorteil, daß der optoelektronische Sensor 1 sehr störfest ist, wodurch eine Beeinflussung des Meßergebnisses aufgrund von Streulicht verhindert wird. Darüber hinaus kann die VCSEL-Diode 15 auch als sehr schnelle Fotodiode eingesetzt werden.

Die in Fig. 2 und 3 dargestellten erfindungsgemäßen optoelektronischen Sensoren 1 unterscheiden sich dadurch, daß in Fig. 2 eine Reflexlichtschranke mit einem Reflektor 8 dargestellt ist, während die Fig. 3 einen Reflexlichttaster zeigt, bei dem der Sendestrahl 7 an einem zu detektierenden Objekt 2 diffus zurückreflektiert wird. Der erfindungsgemäße optoelektronische Sensor 1 kann somit sowohl als Reflexlichtschranke mit einem Reflektor 8 als auch als Reflextaster ohne einen Reflektor verwendet werden. Zur Erzielung einer ausreichenden Reichweite kann hierzu einfach die Sendeleistung der VCSEL-Diode 15 erhöht werden.

Bei dem erfindungsgemäßen optoelektronischen Sensor 1 wird von dem als Lichtsender fungierenden Bauelement 14 ein Sendestrahl 7 erzeugt, der durch die Sende- und Empfangsoptik 6 auf den Reflektor 8 (Fig. 2) oder ein Objekt 2 (Fig. 3) gelenkt wird. Der am Reflektor 8 oder am Objekt 2 reflektierte Empfangsstrahl 9 trifft wieder auf die Sende- und Empfangsoptik 6, von der er auf das nun als Lichtempfänger fungierende Bauelement 14 gelenkt wird. Durch die Verwendung nur einer Sende- und Empfangsoptik 6 kann deren Durchmesser bei ansonsten gleichen Abmessungen des Gehäuses 3 vergrößert werden, im Vergleich zu Durchmesser der Empfangsoptik 5 bei einem optoelektronischen Sensor 1 mit einer Sendeoptik 4 und einer separaten Empfangsoptik 5 gemäß Fig. 1 a.

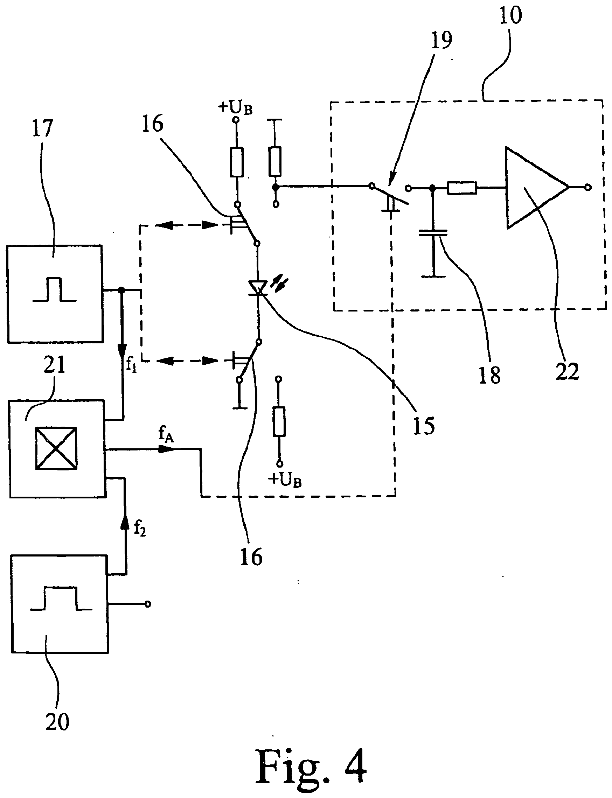

In Fig. 4 ist ein stark vereinfachtes Schaltbild des optoelektronischen Sensors 1 dargestellt, das auch zur Erläuterung des erfindungsgemäßen Verfahrens dient. Vorzugsweise wird mit dem erfindungsgemäßen optoelektronischen Sensor 1 nicht nur das Vorhandensein oder nicht Vorhandensein eines Objekts 2 in einem Überwachungsbereich festgestellt, sondern es erfolgt auch eine Bestimmung der Entfernung des Objekts 2 von dem optoelektronischen Sensor 1, wozu der optoelektronische Sensor 1 nach dem Lichtlaufzeitprinzip arbeitet.

Hierzu werden von der als Sende- und Empfangsbauelement dienenden VCSEL-Diode 15 sehr kurze optische Sendeimpulse mit einer Impulsbreite von nur ca. 1 ns abgestrahlt. Zur Umschaltung der VCSEL-Diode 15 vom Sendebetrieb in den Empfangsbetrieb ist ein Brückenschalter 16 vorgesehen, mit dessen Hilfe die im Sendebetrieb in Durchlaßrichtung betriebene VCSEL-Diode 15 umgepolt wird. Ein Hochfrequenzgenerator 17 dient dabei sowohl zur Erzeugung des elektrischen Sendeimpulses als auch zur Steuerung des Brückenschalters 16. Als Brückenschalter 16 können beispielsweise vier in Brückenschaltung miteinander verschaltete Monoflops dienen.

Der aufgrund der sehr großen Ausbreitungsgeschwindigkeit des Lichtes sehr kurze Licht-Laufzeitimpuls wird durch stroboskopische Abtastung zeitlich gedehnt. Hierzu ist in der Auswerteschaltung 10 des optoelektronischen Sensors 1 ein Abtaster vorgesehen, der einen Speicherkondensator 18 und einen schnellen Schalter 19 aufweist. Dabei wird das elektrische Empfangssignal jeweils für eine sehr kurze Zeitdauer abgetastet und der Abtastzeitpunkt kontinuierlich zwischen aufeinanderfolgenden Perioden des elektrischen Sendeimpulses verschoben. Dadurch wird die Verarbeitung der sehr kurzen Licht-Laufzeitimpulse so stark zeitgedehnt, daß sie problemlos mit einem Mikroprozessor ausgewertet werden können und parasitäre Laufzeiten der Auswerteschaltung 10, d. h. der Elektronik keine Bedeutung mehr haben.

Zur Erzeugung des Abtastimpulses sind ein Niederfrequenzgenerator 20 und ein Mischer 21 vorgesehen, wobei sich die Abtastfrequenz f_{A} des Abtastimpulses aus der Summe der Frequenz f₁ des Hochfrequenzgenerators 17 und der Frequenz f₂ des Niederfrequenzgenerators 20 ergibt. Der Schalter 19 kann dabei von einer Abtastbrücke bestehend aus vier Monoflops gesteuert werden, was den Vorteil hat, daß dadurch die Impulsbreite des Abtastimpulses auf die Größenordnung der Impulsbreite des Sendeimpulses verkürzt werden kann. Der Zeitdehnungsfaktor der stroboskopischen Abtastung ergibt sich im vorliegenden Fall als Quotient der Frequenz f₁ zur Frequenz f₂, so daß bei einem Hochfrequenzsignal von beispielsweise f₁ = 1 MHz und einem Niederfrequenzsignal von beispielsweise f₂ = 1 kHz ein Zeitdehnungsfaktor von 1000 erreicht wird.

Anstelle der anhand von Fig. 4 schematisch dargestellten analogen Ablaufsteuerung kann auch eine digitale Ablaufsteuerung realisiert sein, bei der dann der Abtastimpuls aus einer Überlagerung der hochfrequenten Sendefrequenz f₁ mit einer zweiten hochfrequenten Frequenz f₃ erzeugt wird. Die beiden Frequenzen f₁ und f₃ weisen dabei nur einen sehr geringen Frequenzunterschied auf, wobei sich dann der Zeitdehnungsfaktor aus dem Verhältnis der hochfrequenten Sendefrequenz f₁ zur Differenzfrequenz (f₁ - f₃) ergibt. Hierbei können zwei quarzstabile Hochfrequenzoszillatoren verwendet werden, bei denen der Frequenzunterschied mit Hilfe einer PLL-Frequenzanalyse erzeugt wird, bei der jeder n-te Impuls verschluckt wird.

Die Auswerteschaltung 10 weist noch einen Verstärker 22 und vorzugsweise einen Mikrocontroller auf, so daß dann mit dem optoelektronischen Sensor 1 ein grundsätzlich bekanntes Teach-In-Verfahren durchgeführt werden kann, bei dem beispielsweise Reflektionen von einem Hintergrund oder einem transparenten Objekt eingelernt, gespeichert und bei der nachfolgenden Messung berücksichtigt werden können.

## Patentansprüche

1. Optoelektronischer Sensor, insbesondere Reflexlichtschranke oder Reflexlichttaster, zum Detektieren eines Objekts (2) in einem Überwachungsbereich, mit einem Gehäuse (3), mit einer Sende- und Empfangsoptik (6), mit mindestens einem optoelektronischen Bauelement und mit einer Auswerteschaltung (10),
**dadurch gekennzeichnet,**
**dass** ein und dasselbe optoelektronische Bauelement (14) zeitlich nacheinander als Lichtsender und als Lichtempfänger fungiert,
so dass nur ein optoelektronisches Bauelement (14) vorgesehen ist, das sowohl als Sendebauelement als auch als Empfangsbauelement fungiert,
so dass keine räumliche Trennung zwischen Lichtsender und Lichtempfänger besteht und somit der optische Signalweg innerhalb des optoelektronischen Sensors (1) für das optische Sendesignal und das optische Empfangssignal identisch ist.

2. Optoelektronischer Sensor nach Anspruch 1, **dadurch gekennzeichnet, dass** nur eine einzige Sende- und Empfangsoptik (6) vorgesehen ist, die mindestens eine Linse aufweist.

3. Optoelektronischer Sensor nach Anspruch 1 oder 2, **dadurch gekennzeichnet, dass** als optoelektronisches Bauelement (14) eine Diode, vorzugsweise eine Laserdiode, insbesondere eine VCSEL-Diode (15) (Vertical Cavity Surface Emitting Laserdiode), vorgesehen ist, wobei die Diode (15) als Lichtsender in Durchlaßrichtung und als Lichtempfänger in Sperrichtung beschaltet ist.

4. Optoelektronischer Sensor nach Anspruch 3, **dadurch gekennzeichnet, dass** die Diode (15) über mindestens einen Schalter, insbesondere einen Brückenschalter (16), vom Sendebetrieb in den Empfangsbetrieb umschaltbar ist, wobei der Brückenschalter (16) von einem Hochfrequenzgenerator (17) gesteuert ist.

5. Optoelektronischer Sensor nach einem der Ansprüche 1 bis 4, **dadurch gekennzeichnet, dass** die Auswerteschaltung (10) einen Abtaster mit einem Speicherkondensator (18) und einem Schalter (19) aufweist.

6. Optoelektronischer Sensor nach Anspruch 5, **dadurch gekennzeichnet, dass** der Schalter (19) von einem zeitlich gedehnten Abtastimpuls gesteuert ist.

7. Optoelektronischer Sensor nach Anspruch 6, **dadurch gekennzeichnet, dass** ein Hochfrequenzgenerator (17), ein Niederfrequenzgenerator (20) und ein Mischer (21) vorgesehen sind und dass der Sendeimpuls von dem Hochfrequenzgenerator (18) und der Abtastimpuls von dem am Mischer (21) erzeugten Mischprodukt aus der Frequenz f₁ des Hochfrequenzgenerators (17) und der Frequenz f₂ des Niederfrequenzgenerators (20) abgeleitet ist.

8. Optoelektronischer Sensor nach Anspruch 6, **dadurch gekennzeichnet, dass** ein erster Hochfrequenzgenerator, ein zweiter Hochfrequenzgenerator und ein Mischer vorgesehen sind.

9. Verfahren zur Detektion eines Objekts in einem Überwachungsbereich, mit einem optoelektronischen Sensor, insbesondere nach einem der Ansprüche 1 bis 8, wobei ein elektrisches Sendesignal in ein optische Sendesignal umgewandelt wird, das optische Sendesignal in den Überwachungsbereich ausgesendet, von einem Reflektor oder einem Objekt als optisches Empfangssignal zumindest teilweise zum optoelektronischen Sensor zurück reflektiert und in ein elektrisches Empfangssignal umgewandelt wird,
**dadurch gekennzeichnet,**
**dass** die Umwandlung des elektrischen Sendesignals in das optische Sendesignal und die Umwandlung des optischen Empfangssignals in das elektrische Empfangssignal zeitlich nacheinander durch ein und dasselbe optoelektronische Bauelement erfolgt,
so der optische Signalweg innerhalb des optoelektronischen Sensors für das optische Sendesignal und das optische Empfangssignal identisch ist, d. h. das optische Sendesignal und das optische Empfangssignal denselben optischen Signalweg in unterschiedlicher Richtung durchlaufen.

10. Verfahren nach Anspruch 9, wobei das elektrische Sendesignal pulsförmig ist, **dadurch gekennzeichnet, dass** die Laufzeit des optischen Signals gemessen und daraus die Entfernung des Objekts bestimmt wird.

11. Verfahren nach Anspruch 10, **dadurch gekennzeichnet, dass** das elektrische Empfangssignal stroboskopisch abgetastet und damit zeitlich gedehnt wird.

12. Verfahren nach Anspruch 11, **dadurch gekennzeichnet, dass** das elektrische Empfangssignal für einen kurzen Zeitraum abgetastet und der Abtastzeitpunkt kontinuierlich zwischen aufeinander folgenden Perioden des Sendeimpulses verschoben wird.

13. Verfahren nach Anspruch 12, **dadurch gekennzeichnet, dass** die Abtastfrequenz f_{A} durch Mischung der hochfrequenten Sendefrequenz f₁ mit einer zweiten niedrigeren Frequenz f₂ erzeugt wird, wobei die Sendefrequenz f₁ vorzugsweise im Bereich von einigen 100 kHz bis einigen MHz und die zweite niedrigere Frequenz f₂ vorzugsweise im Bereich von einigen 100 Hz bis einigen kHz liegt.

14. Verfahren nach Anspruch 12, **dadurch gekennzeichnet, dass** die Abtastfrequenz f_{A} durch Mischung der hochfrequenten Sendefrequenz f₁ mit einer zweiten hochfrequenten Frequenz f₃ erzeugt wird, wobei die Sendefrequenz f₁ und die zweite Frequenz f₃ vorzugsweise im Bereich von einigen 100 kHz bis einigen MHz liegen.

15. Verfahren nach einem der Ansprüche 11 bis 14, mit einem eine Auswerteschaltung aufweisenden optoelektronischen Sensor, **dadurch gekennzeichnet, dass** die Abtastfrequenz f_{A} durch die Auswerteschaltung bearbeitet, insbesondere verkürzt und/ oder komprimiert wird.

16. Verfahren nach einem der Ansprüche 9 bis 15, **dadurch gekennzeichnet, dass** das elektrische Sendesignal eine Impulsbreite von ca. 1 ns hat.

17. Verfahren nach einem der Ansprüche 9 bis 16, mit einer einen Mikrocontroller aufweisenden Auswerteeinheit, **dadurch gekennzeichnet, dass** über den Mikrocontroller ein Teach-In-Verfahren durchgeführt werden kann.

## Claims

1. Optoelectronic sensor, especially a reflection photoelectronic barrier or a reflection light sensing device, for detecting an object (2) in a monitored area, with a housing (3), with a transmitting and receiving optics (6), with at least one optoelectronic component, and with an evaluation circuit (10)
**characterized in**
**that** a single optoelectronic component (14) acts sequentially in time as a opto-transmitter and as opto-receiver, so that only one optoelectronic component (14) is provided, which functions both as a transmission device as well as a receiving device,
so that there is no spacial separation between the opto-transmitter and the op-to-receiver and therefore the optical signal path within the optoelectronic sensor (1) is identical for the optical transmission signal and the optical received signal.

2. Optoelectronic sensor according to claim 1, **characterized in that** only a single transmitting and receiving optics (6) is provided, which comprises at least one lens.

3. Optoelectronic sensor according to claim 1 or 2, **characterized in that** a diode, preferably a laser diode, especially a VCSEL diode (15) (vertical cavity surface emitting laser diode) is provided as optoelectronic component (14), wherein the diode (15) is wired in the forward direction as light emitter and in the reverse direction as light receiver.

4. Optoelectronic sensor according to claim 3, **characterized in that** the diode (15) is switchable from transmission operation into receiving operation via at least one switch, in particular a bridge switch (16), wherein the bridge switch (16) is controlled by a high-frequency generator (17).

5. Optoelectronic sensor according to any one of claims 1 to 4, **characterized in that** the evaluation circuit (10) has a scanner with a storage capacitor (18) and a switch (19).

6. Optoelectronic sensor according to claim 5, **characterized in that** the switch is controlled (19) by a time-stretched scanning pulse.

7. Optoelectronic sensor according to claim 6, **characterized in that** a high frequency generator (17), a low frequency generator (20) and a mixer (21) are provided and that the transmitted pulse is derived from the high frequency generator (18) and the scanning pulse is derived from a mixed product generated by the mixer (21) from the frequency f₁ of the high frequency generator (17) and the frequency f₂ of the low frequency generator (20).

8. Optoelectronic sensor according to claim 6, **characterized in that** a first high frequency generator, a second high frequency generator and a mixer are provided.

9. Process for detecting of an object in a monitored area, with an optoelectronic sensor, especially according to any one of claims 1 to 8, wherein an electrical transmission signal is converted into an optical transmission signal, the optical transmission signal beeing emitted into the monitored area, at least partially reflected back to the optoelectronic sensor by a reflector or an object as an optical received signal and converted into an electrical received signal,
**characterized in**
**that** the conversion of the electrical transmission signal into the optical transmission signal and the conversion of the received optical signal into the electrical received signal takes place succession in time by a single optoelectronic component,
so that the optical signal path within the optoelectronic sensor is identical for the optical transmission signal and the optical received signal, i.e. the optical transmission signal and the optical received signal traverse the same optical signal path in different directions.

10. Process according to claim 9, wherein the electrical transmission signal is pulsed, **characterized in that** the transit time of the optical signal is measured and the distance of the object is determined from it.

11. Process according to claim 10, **characterized in that** the electrical received signal is stroboscopically scanned so as to be stretched in time.

12. Process according to claim 11, **characterized in that** the electrical received signal is scanned for a short time period and a scanning instant is shifted continuously between successive periods of the transmitted pulse.

13. Process according to claim 12, **characterized in that** the scanning frequency f_{A} is produced by mixing the high transmitted frequency f₁ with a second lower frequency f₂, wherein the transmitted frequency f₁ is preferably in a range of a few 100 kHz to a few MHz, and the second lower frequency f₂ is preferably in a range of a few 100 Hz to a few kHz.

14. Process according to claim 12, **characterized in that** the scanning frequency f_{A} is produced by mixing the high frequency f₁ with a second high frequency f₃, wherein the transmitted frequency f₁ and the second frequency f₃ preferably are in a range of a few 100 kHz to a few MHz.

15. Process according to any one of claims 11 to 14 having a optoelectronic sensor comprising an evaluation circuit, **characterized in that** the scanning frequency f_{A} is processed by the evaluation circuit is, in particular, shortened and/or compressed.

16. Process according to any one of claims 9 to 15, **characterized in that** the electrical transmission signal has a pulse width of roughly 1 ns.

17. Process according to any one of claims 9 to 17, having an evaluation unit comprising a microcontroller, **characterized in that** a teach-in process can be carried out via the microcontroller.

## Revendications

1. Capteur optoélectronique, notamment sous la forme d'une barrière optique à réflexion ou un dispositif de balayage optique à réflexion, destiné à détecter un objet (2) se trouvant dans une zone de surveillance, comportant un boîtier (3) muni d'une optique d'émission et de réception (6), d'au moins un composant optoélectronique et d'un circuit d'évaluation (10),
**caractérisé en ce**
**qu'**un seul et même composant optoélectronique (14) fonctionne consécutivement dans le temps en tant qu'émetteur de lumière et que récepteur de lumière de telle sorte qu'il n'est prévu qu'un seul composant optoélectronique (14) fonctionnant à la fois en tant que composant émetteur et que composant récepteur,
de telle sorte que pas de séparation spatiale entre l'émetteur de lumière et le récepteur de lumière exist et ainsi le trajet de signal optique à l'intérieur du capteur optoélectronique (1) est identique pour le signal d'émission optique et pour le signal de réception optique.

2. Capteur optoélectronique selon la revendication 1, **caractérisé en ce qu'**il n'est prévu qu'une seule optique d'émission et de réception (6) qui comprend au moins une lentille.

3. Capteur optoélectronique selon la revendication 1 ou 2, **caractérisé en ce qu'**il est prévu en tant que composant optoélectronique (14) une diode, de préférence une diode laser, notamment une diode VCSEN (15) (Vertical Cavity Surface Emitting Laserdiode), la diode (15) étant connectée en tant qu'émetteur de lumière dans le sens passant et que récepteur de lumière dans le sens non passant.

4. Capteur optoélectronique selon la revendication 3, **caractérisé en ce que** la diode (15) peut être amenée à passer d'un fonctionnement en émission à un fonctionnement en réception par l'intermédiaire d'au moins un commutateur, notamment un circuit en pont (16), le circuit en pont (16) étant commandé par un générateur à haute fréquence (17).

5. Capteur optoélectronique selon l'une quelconque des revendications 1 à 4, **caractérisé en ce que** le circuit d'évaluation (10) comprend un dispositif de balayage comportant un condensateur de stockage (18) et un commutateur (19).

6. Capteur optoélectronique selon la revendication 5, **caractérisé en ce que** le commutateur (19) est commandé par une impulsion d'échantillonnage étendu dans le temps.

7. Capteur optoélectronique selon la revendication 6, **caractérisé en ce qu'**il est prévu un générateur à haute fréquence (17), un générateur à basse fréquence (20) et un mélangeur (21) et **en ce que** l'impulsion d'émission est déduite par le générateur à haute fréquence (17) et l'impulsion de balayage est déduite du produit de mélange généré dans le mélangeur (21) à partir de la fréquence f₁ du générateur à haute fréquence (17) et de la fréquence f₂ du générateur à basse fréquence (20).

8. Capteur optoélectronique selon la revendication 6, **caractérisé en ce qu'**il est prévu un premier générateur à haute fréquence, un second générateur à haute fréquence et un mélangeur.

9. Procédé de détection d'un objet dans une zone de surveillance, comportant un capteur optoélectronique, notamment tel que décrit selon l'une quelconque des revendications 1 à 8, un signal d'émission électrique étant converti en un signal d'émission optique, le signal d'émission optique étant émis dans la zone de surveillance, étant rétroréfléchi par un réflecteur ou un objet sous la forme d'un signal optique de réception au moins en partie vers le capteur optoélectronique et étant converti en un signal de réception électrique,
**caractérisé en ce**
**que** la conversion du signal d'émission électrique en le signal d'émission optique et la conversion du signal de réception optique en le signal de réception électrique s'effectuent consécutivement dans le temps au moyen d'un seul et même composant optoélectronique,
de telle sorte que le trajet de signal optique à l'intérieur du capteur optoélectronique est identique pour le signal d'émission optique et pour le signal de réception optique, c'est-à-dire que le signal d'émission optique et le signal de réception optique suivent le même trajet de signal optique dans des directions différentes.

10. Procédé selon la revendication 9, dans lequel le signal d'émission optique est de forme impulsionnelle, **caractérisé en ce que** le temps de parcours du signal optique est mesuré et **en ce que** la distance de l'objet est déterminée à partir de celui-ci.

11. Procédé selon la revendication 10, **caractérisé en ce que** le signal de réception électrique est échantillonné de manière stroboscopique et est ainsi étendu dans le temps.

12. Procédé selon la revendication 11, **caractérisé en ce que** le signal de réception électrique est soumis à un balayage pendant un court intervalle de temps et **en ce que** le point de balayage est décalé continûment entre des périodes consécutives de l'impulsion d'émission.

13. Procédé selon la revendication 12, **caractérisé en ce que** la fréquence de balayage f_{A} est générée par mélange de la fréquence d'émission élevée f₁ avec une seconde fréquence inférieure f₂, la fréquence d'émission f₁ se situant de préférence dans un intervalle de quelques 100 kHz à quelques MHz et la seconde fréquence inférieure f₂ se situant de préférence dans un intervalle de quelques 100 Hz à quelques kHz.

14. Procédé selon la revendication 12, **caractérisé en ce que** la fréquence de balayage f_{A} est générée par mélange de la fréquence d'émission élevée f₁ avec une seconde fréquence élevée f₃, la fréquence d'émission f₁ et la seconde fréquence f₃ se situant de préférence dans un intervalle de quelques 100 kHz à quelques MHz.

15. Procédé selon l'une quelconque des revendications 11 à 14, comportant un capteur optoélectronique comprenant un circuit d'évaluation, **caractérisé en ce que** la fréquence de balayage f_{A} est traitée par le circuit de balayage, et est notamment réduite et/ou comprimée.

16. Procédé selon l'une quelconque des revendications 9 à 15, **caractérisé en ce que** le signal d'émission électrique a une largeur d'impulsion d'environ 1 ns.

17. Procédé selon l'une quelconque des revendications 9 à 17, comportant une unité d'évaluation comprenant un microcontrôleur, **caractérisé en ce qu'**un processus d'auto-apprentissage peut être effectué au moyen du microcontrôleur.
